# EUROPÄISCHE PATENTANMELDUNG

(11) **EP 1 607 376 A1**
(43) Veröffentlichungstag der Anmeldung: **21.12.2005**
(21) Anmeldenummer: 05010466.0
(22) Anmeldetag: 13.05.2005
(51) Int. Cl.: C03C 17/04, C03C 8/02

(54) **Flachglas mit einer anorganischen Beschichtung**

(30) Priorität: 18.05.2004 DE 102004024630
(71) Anmelder: Schollglas Holding- und Geschäftsführungsgesellschaft mbH, 30890 Barsinghausen (DE); Liebherr-Hausgeräte Ochsenhausen GmbH, 88416 Ochsenhausen (DE)
(72) Erfinder: Holtmann, Klaus Dr., 30179 Hannover (DE); Ertel, Thomas, 88299 Leutkirch (DE)
(74) Vertreter: Seewald, Jürgen

(57) **Zusammenfassung**

Die vorliegende Erfindung betrifft Flachglas mit einer anorganischen Beschichtung. Aufgabe der Erfindung ist es, ein kommerzielles Flachglas mit einer antibakteriellen anorganischen Beschichtung zur Verfügung zu stellen, wobei diese Beschichtung die üblichen mechanischen und chemischen Angriffe über die Lebensdauer eines Produkts von mehreren Jahren ohne Verlust der Funktionalität, insbesondere was die antibakterielle Wirkung anbelangt, übersteht. Diese Aufgabe wird dadurch gelöst, dass die Beschichtung eine Rauhigkeit im Bereich von 600 - 1500 nm RMS aufweist, und aus einer im Walz-, Gieß- oder Siebdruckverfahren aufgebrachten, schwermetall- und halogenoidfreien bei 500 - 650°C eingebrannten Kalk-Natrium-Silikat-Glasfritte besteht.

## Beschreibung

Die vorliegende Erfindung betrifft ein Flachglas mit einer anorganischen Beschichtung.

Flachglas zeichnet sich durch seine glatte, abriebfeste und korrosionsbeständige Oberfläche aus und eignet sich aus diesen Gründen hervorragend als Werkstoff in Anwendungsbereichen, in denen ein hohes Maß an Hygiene gefordert wird. Allerdings weisen Kalk-Natrium-Silikat-Flachgläser, wie sie im Bauwesen, Fahrzeugbau und bei Haushaltsgeräten verwendet werden, keine antibakteriellen Eigenschaften auf.

Zur Erzielung dekorativer Effekte auf Flachglas ist es bekannt, eine aus einer gemahlenen Glasfritte bestehende Siebdruckpaste während des Vorspannprozesses des Glases bleibend einzubrennen, wobei die Fritte zu einer dichten Glasschicht sintert.

Aus dem Stand der Technik sind weiterhin Glaszusammensetzungen mit antibakterieller, entzündungshemmender und wundheilender Wirkung bekannt. Zur Erzielung dieser Wirkungen geht man grundsätzlich von zwei Ansätzen aus. Beim ersten Ansatz werden der netzwerkbildenden Glaszusammensetzung antibakterielle Substanzen, wie Schwermetalle (Ag, Zn, Cu) oder Jodide und Fluoride in einer wasserlöslichen Form beigefügt (DE 101 41 117 A1, 101 56 577 A1). Beide Glaszusammensetzungen sind für eine fest eingebrannte Schicht nur bedingt geeignet. Hintergrund ist dabei, dass die wirksamen Komponenten aus der Glasmatrix diffundieren müssen, um ihre Wirkung an den Bakterien zu entfalten. Dies bringt bei einer festgebundenen Schicht automatisch eine Reduktion der Konzentration der aktiven Komponenten an der Grenzfläche mit der Zeit mit sich. Zudem werden die Diffusionswege und das Konzentrationsgefälle geringer. Somit ist eine Wirkung über einen längeren Zeitraum, wie er z. B. beim Einsatz im Bereich von Haushaltsgeräten oder Wandpanelen vorkommt, ausgeschlossen. Zudem besteht insbesondere bei silberhaltigen Beschichtungen die Gefahr, dass diese proteinhaltigen Lösungen und Stoffe Schwefel-Silberverbindungen bilden, die eine antibakterielle Wirkung abdecken.

Beim zweiten Ansatz wird der Auslaugungsprozess der Glasmatrix bei längerem Kontakt mit Wasser genutzt. Dabei kommt es an der Grenzfläche zwischen dem anstehenden Wasser und dem Glas zu einem lonenaustausch, bei dem der pH-Wert auf der Oberfläche des Glases so weit ansteigt, dass dadurch das Bakterienwachstum behindert wird (DE 102 13 632 A1, DE 101 41 117 A1). Beide Schriften beschreiben die Zusammensetzung eines Glases, das in Form eines feinen Pulvers (Korngröße < 20 µm) durch lonenaustausch antibakterielle Eigenschaften aufweist. Aufgrund der sehr großen Oberfläche des Glaspulvers steht eine ausreichende Fläche für den lonenaustausch zur Verfügung. Dies bedeutet aber auch, dass sich das Glas verhältnismäßig schnell auflöst, was bei den beschriebenen Anwendungsbereichen (z. B. Kosmetik, Farben, Papierhygiene, Nahrungsmittelzusatz) auch der Fall sein muss. Damit scheiden diese Glaszusammensetzungen für einen dauerhaften Einsatz aus.

Bei beiden Ansätzen wir das erschmolzene Glas zur Erhöhung der Oberfläche gemahlen und dann in Pulverform in eine Trägermatrix eingebracht, die entweder wasserlöslich oder aber für den Transport von Wasser und/oder Wasserdampf diffusionsoffen ist. Dies ist auch erforderlich, um den Transport der aktiven Komponenten aus dem Glas an die Oberfläche zu gewährleisten.

Aufgabe der vorliegenden Erfindung ist es, ein konventionelles Flachglas mit einer antibakteriellen anorganischen Beschichtung zur Verfügung zu stellen, wobei diese Beschichtung die üblichen mechanischen und chemischen Angriffe über die Lebensdauer eines Produkts von mehreren Jahren ohne Verlust der Funktionalität, insbesondere was die antibakterielle Wirkung anbelangt, übersteht.

Diese Aufgabe wird erfindungsgemäß mit einem Flachglas gelöst, das die Merkmale des Anspruchs 1 aufweist.

Im allgemeinen werden glatte Oberflächen als besonders hygienisch angesehen. Es hat sich nun überraschenderweise herausgestellt, dass in Abkehr von dieser landläufigen Auffassung Flachglas antibakteriell ausgestattet werden kann, wenn es mit einer eingebrannten Kalk-Natrium-Silikat-Glasfritte beschichtet ist, welche eine Rauhigkeit im Bereich von 600 - 1500 nm RMS aufweist.

Dieser Effekt lässt sich damit erklären, dass auch hier die aus dem Stand der Technik bekannte pH-Werterhöhung in der Grenzschicht genutzt wird. In den Vertiefungen der mikrorauhen Oberfläche der Glasfritte sammelt sich schon bei normaler Luftfeuchtigkeit Wasser. Die dadurch gebildeten vielen kleinen Wasserreservoirs begünstigen den lonenaustausch, bei dem die H +-lonen des Wassers in das angrenzende Glasnetzwerk wandern und dort die vorhandene Netzwerkwandler Natrium und/oder Kalium ersetzen. Letztere bilden im anstehenden Wasser Kali oder Natronlauge und erhöhen damit den pH-Wert der wässrigen Lösung. Diese kann auch durch Konvektionsbewegungen oder Strömungen nicht ausreichend ersetzt werden, so dass es in den Vertiefungen zu einer lokalen Anreicherung einer stark basischen Lösung (pH-Wert > 9 < 12) kommt. Im Falle eines Austrocknens der Oberfläche bleiben in den Vertiefungen die festen Hydroxide der Alkali-lonen erhalten, so dass der pH-Wert bei Zuführung von Feuchtigkeit sofort wieder vorhanden ist.

Die lokal erhöhte Anreicherung von Hydroxidionen in der Beschichtung und der dadurch lokal erhöhte pH-Wert ermöglicht es, bei der Zusammensetzung der Glasfritte Zusammensetzungen zu wählen, die mit geringen Konzentrationen an Netzwerkwandlern auskommen. Dadurch wird es möglich, auch Glaszusammensetzungen zu wählen, die eine ausreichend hohe Hydrolyseklasse erreichen. Dadurch kann erfindungsgemäßes Flachglas regelmäßig in einer Spülmaschine gereinigt werden, ohne die antibakterielle Wirkung nachhaltig zu beeinträchtigen.

In einem Versuch wurde die antibakterielle Wirkung eines erfindungsgemäßen Flachglases ermittelt. Das verwendete Prüfverfahren ist in DE 197 51 581 A1 beschrieben. Es hat sich herausgestellt, dass eine erfindungsgemäß beschichtete Glasscheibe gegenüber einer unbehandelten Glasscheibe zu einer Zeitverzögerung des Bakterienwachstums von 7 - 50 Std. führt. Die Verzögerung war dabei um so größer, je größer die Oberflächenrauhigkeit war. Die Oberflächenrauhigkeit sollte aber einen Wert von 1, 5 µm nicht übersteigen, da ansonsten der Abrieb zu groß werden kann, wenn Gegenstände auf der Beschichtung verschoben werden. Ein Mittelwert der Rauhigkeit von ca. 1100 nm hat sich als vorteilhaft herausgestellt.

Erfindungsgemäß ausgestattetes Flachglas ist insbesondere für die Verwendung als Einlegeböden in Kühlschränken geeignet. Dabei ist es ausreichend, wenn nur eine Oberfläche des Flachglases beschichtet ist, und diese als Lagerfläche benutzt wird, also nach oben zeigt. Aufgrund des Klimas in Kühlschränken steht auf der beschichteten Oberfläche immer genügend Wasser an, so dass für einen ausreichend hohen pH-Wert und die damit einhergehende antibakterielle Wirkung gesorgt ist.

## Patentansprüche

1. Flachglas mit einer anorganischen Beschichtung, **dadurch gekennzeichnet, dass** die Beschichtung eine Rauhigkeit im Bereich von 600 - 1500 nm RMS aufweist, und aus einer im Walz-, Gieß- oder Siebdruckverfahren aufgebrachten, schwermetall- und halogenoidfreien bei 500 - 650° C eingebrannten Kalk-Natrium-Silikat-Glasfritte besteht.

2. Flachglas nach Anspruch 1, **dadurch gekennzeichnet, dass** die Rauhigkeit der Beschichtung vorzugsweise bei 1100 nm RMS liegt.
